# EUROPÄISCHE PATENTSCHRIFT

(11) **EP 1 923 284 B1**
(45) Veröffentlichungstag und Bekanntmachung des Hinweises auf die Patenterteilung: **16.03.2016**
(21) Anmeldenummer: 07022082.7
(22) Anmeldetag: 14.11.2007
(51) Int. Cl.: B60T 13/26, B60T 13/68, B60T 8/17, B60T 8/24

(54) **Streckbremseinrichtung für Kraftfahrzeuge**
Anti-jack-knife brake device for motor vehicles
Dispositif de freinage à laminoir pour véhicules automobiles

(30) Priorität: 16.11.2006 DE 102006054433
(43) Veröffentlichungstag der Anmeldung: 21.05.2008
(73) Patentinhaber: KNORR-BREMSE Systeme für Nutzfahrzeuge GmbH, 80809 München (DE)
(72) Erfinder: Herges, Michael, 1112 Budapest (HU); Szell, Peter, 1163 Budapest (HU); Holler, Gusztav, 1221 Budapest (HU)
(74) Vertreter: Schönmann, Kurt

(56) Entgegenhaltungen:
- EP-A2- 1 719 677
- DE-A1- 10 132 493
- DE-A1- 19 857 393

## Beschreibung

Die Erfindung bezieht sich auf eine Streckbremseinrichtung für Kraftfahrzeuge gemäß dem Oberbegriff des Patentanspruches

DE 101 32 493 A1 offenbart eine druckmittelbetätigte Bremsanlage einer Zugfahrzeug-Anhänger-Kombination mit zwei Bremskreisen, beinhaltend einen mit einem ersten Druckluftvorrat für den ersten Brenskreis und mit einem zweiten Druckluftvorrat für den zweiten Bremskreis in Verbindung stehenden Mehrkreisbremswertgeber, eine elektronische Steuereinheit, eine Steuerventileinrichtung und ein mit einem Druckluftvorrat in Verbindung bringbares Zugfahrzeug-Schutzventil, durch welches ein Bremsdruck für eine Brensanlage des Anhängers aussteuerbar ist.

Eine solche Streckbremseinrichtung ist aus der DE 34 07 660 A1 bekannt. Unter einer Streckbremseinrichtung oder kurz auch Streckbremse wird üblicherweise die Betätigung der Betriebsbremse eines Anhängers, unabhängig von der Bremsanlage des Zugfahrzeuges, mit einer eigenen Betätigungseinrichtung verstanden, um einen aus einem Zugfahrzeug und einem Anhänger bestehenden Kraftwagenzug gestreckt zu halten. Somit kann der Fahrer die Bremsen des Anhängers separat abgestuft betätigen, ohne daß die Bremsen des Zugfahrzeuges betätigt werden. Auch besteht die Möglichkeit bei einem Bremsvorgang, der sich auf die Bremsen des Zugfahrzeuges und die des Anhängers bezieht, die Bremsen des Anhängers zeitlich voreilen zu lassen um den Kraftwagen gestreckt zu halten.

Bei der aus der DE 34 07 660 A1 bekannten Streckbremseinrichtung ist eine pneumatische, in ein Handbremsventil des Zugfahrzeug integrierte Einrichtung im Führerhaus des Zugfahrzeuges in Reichweite des Fahrers angeordnet, die durch einen mechanisch betätigbaren Kipp-/Drehhebel betätigbar ist. Dies bedingt, daß zusätzliche pneumatische Leitungen in das Führerhaus des Zugfahrzeuges verlegt werden müssen, was einen hohen Montage-, Material- und Kostenaufwand bedingt.

Die DE 34 44 639 A1 zeigt eine Motorfahrzeug-Druckluftanlage für einen Kraftwagenzug mit einem Zugfahrzeug und einem Anhänger, bei dem im Führerhaus des Zugfahrzeuges ein pneumatisches Absperrventil für ein Anhängerbremsventil, ein Parkbremsventil, ein Handbremsventil und das übliche Fußbremsventil angeordnet sind. Über diese Ventile kann ein Anhänger-Hilfsbremskreis angesteuert werden, der unabhängig von den Motorwagenbremsen die Anhängerbremsen im Sinne einer Streckbremse betätigen kann. Auch hier müssen pneumatische Leitungen in das Führerhaus des Zugfahrzeuges verlegt werden.

Aufgabe der Erfindung ist es, die Streckbremseinrichtung der eingangs genannten Art dahingehend zu verbessern, daß Montage-, Material- und Kostenaufwand verringert werden.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Der Grundgedanke der Erfindung liegt darin, das Anhängerbremsventil durch ein elektrisch betätigbares Magnetventil anzusteuern, so daß keine pneumatischen Leitungen in das Führerhaus des Zugfahrzeuges verlegt werden müssen. Das bei bisherigen Fahrzeugen ohne Streckbremse, aber mit elektrischer Feststellbremse verwendete Magnetventil, das dort eine Anhänger-Testfunktion ermöglicht, wird bei der Erfindung mit dem Druckluftbehälter verbunden. Damit kann der Druck zum Anhängersteuerventil unabhängig vom Druck in der Parkbremse des Zugfahrzeuges eingestellt werden.

Bei einer konkreten Ausgestaltung der Erfindung wird der Federspeicherbremszylinder über ein erstes Magnetventil, vorzugsweise ein 3/2-Wege-Magnetventil, verwendet, das an den Druckluftbehälter angeschlossen ist. In ähnlicher Weise wird das Anhängerbremsventil über ein zweites Magnetventil angesteuert, das vorzugsweise ebenfalls ein 3/2-Wege-Magnetventil ist. Das erste und das zweite Magnetventil sind separat ansteuerbar.

Bei einem bevorzugten Ausführungsbeispiel der Erfindung steuert das erste Magnetventil ein Relaisventil an, welches mit dem Druckluftbehälter und dem Federspeicherbremszylinder verbunden ist.

Bei einer Variante der Erfindung steuert das zweite Magnetventil das Anhängerbremsventil unmittelbar an. Nach einer Variante der Erfindung kann das zweite Magnetventil auch eine elektrisch ansteuerbares Proportionalventil sein. Nach einer anderen Variante der Erfindung steuert das zweite Magnetventil ein Relaisventil an, welches den Druckluftbehälter mit dem Anhängerbremsventil verbindet.

Nach einer weiteren Variante der Erfindung ist zwischen das zweite Magnetventil und das Anhängerbremsventil noch ein elektrisch ansteuerbares Haltemagnetventil geschaltet.

Zur Einregelung des Druckes in den Federspeicherbremszylindern und dem Anhängerbremsventil kann in mindestens eine, aber wahlweise auch in beide Zuleitungen ein Druck-/Spannungs-Wandler eingesetzt sein, dessen elektrisches Ausgangssignal dem Steuergerät zugeführt wird. Das Steuergerät kann nach einem vorgegebenen Regelungsalgorithmus dann feinstufig die Drücke in den Federspeicherbremszylindern und dem Anhängerbremsventil einregeln, was vom Fahrer durch Betätigung der entsprechenden Bedienorgane oder auch vollautomatisch vom Steuergerät gesteuert wird.

Im folgenden wird die Erfindung anhand von Ausführungsbeispielen im Zusammenhang mit der Zeichnung ausführlicher erläutert. Es zeigt:
- Fig.1: ein Prinzipschaltbild der Streckbremseinrichtung nach einem ersten Ausführungsbeispiel der Erfindung;
- Fig. 2: ein Prinzipschaltbild einer Streckbremseinrichtung nach einem zweiten Ausführungsbeispiel der Erfindung;
- Fig. 3: ein Prinzipschaltbild einer Streckbremseinrichtung entsprechend einem dritten Ausführungsbeispiel; und
- Fig. 4: ein Prinzipschaltbild einer Streckbremseinrichtung entsprechend einem vierten Ausführungsbeispiel der Erfindung.

In allen Figuren sind nur die für die Streckbremseinrichtung wesentlichen Komponenten dargestellt, während die übrigen für die normale Betriebsbremse des Fahrzeuges benötigten Komponenten der Übersichtlichkeit halber fortgelassen sind.

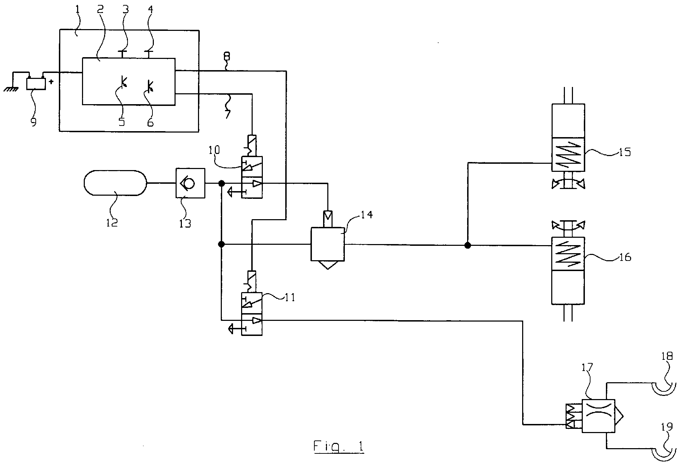

Fig. 1 zeigt schematisch ein Führerhaus 1 eines Zugfahrzeuges, in welchem unter anderem ein elektrisches oder elektronisches Steuergerät 2 angeordnet ist, welches zwei Bedienelemente 3 und 4 aufweist, die beispielsweise Tasten sind, die elektrische oder elektronische Schalter 5 und 6 betätigen, welche beim Schießen des Schalters eine elektrische Spannung aus einer Stromquelle 9 über elektrische Leitungen 7 und 8 an ein erstes Magnetventil 10 und ein zweites Magnetventil 11 liefern, welche dadurch bestromt und damit aktiviert werden. Das erste Magnetventil 10 ist ein 3/2-Wegemagnetventil, welches die Funktion eines Parkbremsventils hat. Das zweite Magnetventil 11 ist ebenfalls ein 3/2-Wege-Magnetventil, welches für eine Bremsanlage des Anhängers des Fahrzeuges zuständig ist.
Beide Magnetventile 10 und 11 sind mit ihrem pneumatischen Eingang mit einem Druckluftbehälter 12 verbunden, wobei zwischen dem Druckluftbehälter 12 und den Magnetventilen 10 und 11 noch ein übliches Rückschlagventil 13 geschaltet ist.

Ein pneumatischer Ausgang des ersten Magnetventils 10 ist mit einem Steuereingang eines Relaisventils 14 verbunden, dessen pneumatische Eingang ebenfalls über das Rückschlagventil 13 mit dem Druckluftbehälter 12 verbunden ist. Der pneumatische Ausgang des Relaisventils 14 ist mit zwei Federspeichern 15 und 16 verbunden, die die übliche Parkbremse des Zugfahrzeuges bilden.

Der pneumatische Ausgang des zweiten Magnetventils 11 ist mit einem Anhängerbremsventil 17 verbunden, dessen Ausgänge mit üblichen Kupplungen 18 und 19 für die pneumatische Ansteuerung der Bremsen des Anhängers verbunden sind.

Die Wirkungsweise der Streckbremseinrichtung der Fig. 1 ist wie folgt:
Das Ein- Ausschalten der Parkbremsen von Zugfahrzeug und Anhänger erfolgt durch paralleles Betätigen der Magnetventile 10 und 11 über die Tasten 3 und 4 und die Schalter 5 und 6, so daß die jeweiligen Parkbremsen (im Zugfahrzeug die Federspeicher 15 und 16) be- oder entlüftet werden, was beim Zugfahrzeug über das erste Magnetventil 10 und des Relaisventil 14 erfolgt.

Die vorgeschriebene Testfunktion für die Anhängerbremse wird dadurch ausgeführt, daß das zweite Magnetventil 11 auf Belüften und das erste Magnetventil 10 auf Entlüften geschaltet wird.

Eine stufbare Parkbremsbetätigung wird dadurch erreicht, daß beide Magnetventile 10 und 11 parallel periodisch auf Be- oder Entlüften geschaltet werden, wobei das Verhältnis von Be- und Entlüftungszeiten den eingesteuerten Druck bestimmt.

Die Funktion der Streckbremse wird dadurch aktiviert, daß das Magnetventil 10 auf Belüften geschaltet wird und das Magnetventil 11 periodisch auf Be- oder Entlüften geschaltet wird, wobei auch hier wiederum das Verhältnis der Be- und Entlüftungszeiten den über das Anhängerbremsventil 17 in der Bremsanlage des Anhängers eingesteuerten Druck bestimmt.

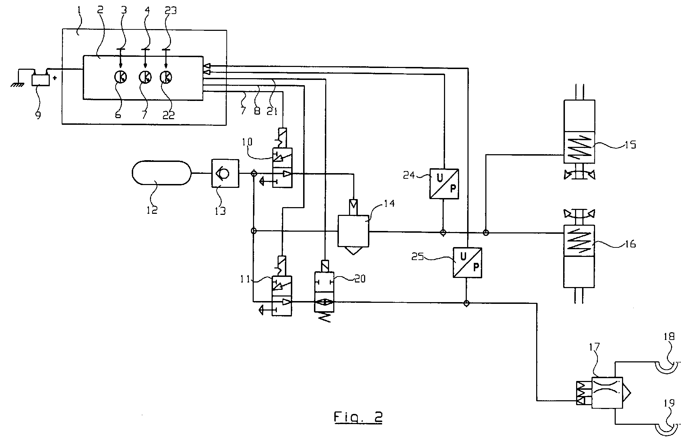

Das Ausführungsbeispiel der Fig. 2 unterscheidet sich von dem der Fig. 1 im wesentlichen dadurch, daß zwischen das zweite Magnetventil 11 und das Anhängerbremsventil 17 noch ein Haltemagnetventil 20 geschaltet ist, welches über eine elektrische Leitung 21 mit dem Steuergerät 2 verbunden ist, wobei das Haltemagnetventil 20 ebenfalls durch ein Bedienelement 23, das z. B. eine Taste ist, mittels eines elektrischen oder elektronischen Schalters 22 aktivierbar und deaktivierbar ist. Weiter ist der Druck in der pneumatischen Leitung zu den Federnspeichern 15 und 16 durch einen ersten Druck-Spannungswandler 24 und der Druck in der pneumatischen Leitung zu dem Anhängerbremsventil 17 durch einen zweiten Druck-Spannungswandler überwacht, wobei jeweils ein dem gemessenen Druck in den genannten Leitungen entsprechendes elektrisches Signal an das Steuergerät 2 geliefert wird.

Die Wirkungsweise der Streckbremseinrichtung 2 ist wie folgt:
Ein- und Ausschaltfunktion der Parkbremse:
   Die beiden Magnetventile 10 und 11 werden wie beim Ausführungsbeispiel der Fig. 1 parallel auf Be- oder Entlüften geschaltet. Der Haltemagnet 20 ist unbestromt.

### Testfunktion:

Das Magnetventil 11 wird auf Belüften, das Magnetventil 10 auf Entlüften geschaltet. Der Haltemagnet 20 ist unbestromt.

### Stufbare Parkbremsbetätigung:

Das Magnetventil 10 wird periodisch auf Be- oder Entlüften geschaltet. Der resultierende Druck wird von dem Druckspannungswandler 24 gemessen und an das Steuergerät 2 gemeldet. Das Magnetventil 11 wird eingeschaltet und der Haltemagnet 20 wird taktweise ein- und ausgeschaltet bis der von dem Druckspannungswandler 25 gemessene Druck zum Anhängerbremsventil auf den gleichen Druck eingeregelt hat, der der Parkbremse, also den Federspeichern 15 und 16, zugeführt wird.

### Streckbremse:

Das Magnetventil 10 ist auf Belüften geschaltet, die Parkbremse also gelöst. Durch Schalten des Magnetventil 11 und Pulsen des Haltemagnetventils 20 wird der Druck zum Anhängerbremsventil 17 unter Messung des Druckspannungswandlers 25 gemäß einem vom Steuergerät 2 vorgegebenen Druckregelalgorithmus geregelt.

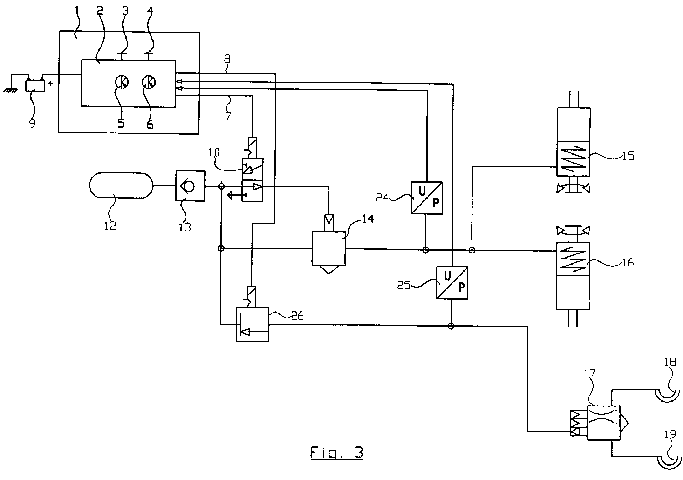

Das Ausführungsbeispiel der Fig. 3 unterscheidet sich von dem der Fig. 1 im wesentlichen dadurch, daß das zweite Magnetventil 11 durch ein Proportionalventil 26 ersetzt ist.

Weiter ist auch hier in die pneumatische Leitung zu den Federspeichern 15 und 16 ein Druckspannungswandler 24 und in die pneumatische Leitung zu dem Anhängerbremsventil 17 ein Druckspannungswandler 25 eingeschaltet, die ihre elektrischen Ausgangssignale an das Steuergerät 2 melden. Über das Proportionalventil 26, den Druckspannungswandler 25 und einem Regelalgorithmus in dem Steuergerät 2 kann der dem Anhängerbremsventil 17 zugeführte Druck für die Streckbremse stufenlos eingeregelt werden. Die übrigen Funktionen entsprechen analog denen des Ausführungsbeispieles der Fig. 3.

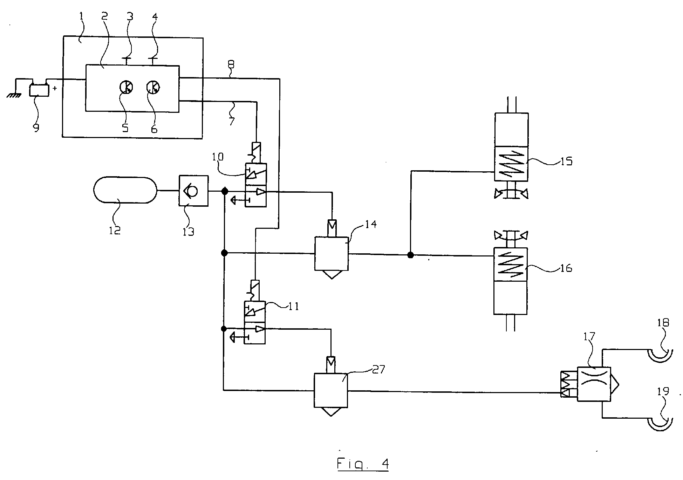

Das Ausführungsbeispiel der Fig. 4 unterscheidet sich von dem der Fig. 1 dadurch, daß das zweite Magnetventil 11 als Steuerventil für ein Relaisventil 27 verwendet wird. Der pneumatische Ausgang des zweiten Magnetventils 11 ist somit mit einem Steuereingang des Relaisventils 27 verbunden. Der pneumatische Eingang des Relaisventils 27 ist über das Rückschlagventil 13 mit dem Druckbehälter 12 und der pneumatische Ausgang des Relaisventils 27 ist mit dem pneumatischen Eingang des Anhängerbremsventils 17 verbunden.

Die Funktionsweise der Streckbremseinrichtung gemäß dem Ausführungsbeispiel der Fig. 4 ist analog dem Ausführungsbeispiel der Fig. 1 mit dem Unterschied, daß der Druck für die Streckbremsfunktion über das zweite Magnetventil 11 im Zusammenwirken mit dem Relaisventil 27 eingestellt wird.

## Patentansprüche

1. Streckbremseinrichtung für ein Kraftfahrzeug bestehend aus einem Zugfahrzeug und einem Anhänger, mit mindestens einem in einem Zugfahrzeug angeordneten Druckluftbehälter, mindestens einem in einem Zugfahrzeug angeordneten Federspeicherbremszylinder und mindestens einem in dem Zugfahrzeug angeordneten Anhängerbremsventil, und mit einem im Zugfahrzeug angeordnetem Steuergerät zur Ansteuerung des Federspeicherbremszylinders und des Anhängerbremsventils, **dadurch gekennzeichnet,**
**daß** der mindestens eine Federspeicherbremszylinder (15, 16) über ein erstes Magnetventil (10) mit dem Druckluftbehälter (12) verbindbar ist,
**daß** das Anhängerbremsventil (17) über ein zweites Magnetventil (11; 20; 26) mit dem Druckluftbehälter verbindbar ist und daß das Steuergerät (2) über elektrische Leitungen (7, 8) mit dem ersten Magnetventil (10) und dem zweiten Magnetventil (11, 26) verbunden ist, und so ausgebildet ist, daß das erste Magnetventil (10) und das zweite Magnetventil (11, 26) separat ansteuerbar sind.

2. Streckbremseinrichtung nach Anspruch 1, **dadurch gekennzeichnet, daß** das erste Magnetventil (10) ein 3/2-Wege-Magnetventil ist.

3. Streckbremseinrichtung nach Anspruch 2, **dadurch gekennzeichnet, daß** das erste Magnetventil (10) ein Relaisventil (14) ansteuert.

4. Streckbremseinrichtung nach einem der Ansprüche 1 bis 3, **dadurch gekennzeichnet, daß** das zweite Magnetventil (11) ein 3/2-Wege-Magnetventil ist.

5. Streckbremseinrichtung nach einem der Ansprüche 1 bis 3, **dadurch gekennzeichnet, daß** das zweite Magnetventil ein elektrisch ansteuerbares Proportionalventil (26) ist.

6. Streckbremseinrichtung nach Anspruch 4, **dadurch gekennzeichnet, daß** das zweite Magnetventil (11) das Anhängerbremsventil (17) unmittelbar ansteuert.

7. Streckbremseinrichtung nach Anspruch 4, **dadurch gekennzeichnet, daß** das zweite Magnetventil (11) ein Relaisventil (27) ansteuert, welches den Druckluftbehälter (12) mit dem Anhängerbremsventil (17) verbindet.

8. Streckbremseinrichtung nach Anspruch 4, **dadurch gekennzeichnet, daß** zwischen das zweite Magnetventil (11) und das Anhängerbremsventil (17) ein elektrisch ansteuerbares Haltemagnetventil (20) geschaltet ist.

9. Streckbremseinrichtung nach den Ansprüchen 5 und 8, **dadurch gekennzeichnet, daß** an mindestens eine der pneumatischen Zuleitungen zu den Federspeicherbremszylindern (15, 16) und/oder zu dem Anhängerbremsventil (17) ein Druckspannungswandler (24, 25) angeschlossen ist, dessen elektrisches Ausgangssignal dem Steuergerät (2) zuführbar ist.

10. Streckbremseinrichtung nach einem der Ansprüche 1 bis 9, **dadurch gekennzeichnet, daß** Bedienelemente (3, 4, 23) für das Steuergerät (2) im Führerhaus (1) des Zugfahrzeuges angeordnet sind.

## Claims

1. Anti-jack-knife brake device for a motor vehicle, composed of a tractor vehicle and a trailer, comprising at least one compressed-air reservoir disposed in a tractor vehicle, at least one spring accumulator brake actuator disposed in a tractor vehicle, and at least one trailer brake valve disposed in said tractor vehicle, and a controller device disposed in said tractor vehicle for controlling said spring accumulator brake actuator,
**characterised in**
**that** said at least one spring accumulator brake actuator (15, 16) is adapted to be connected via a first solenoid valve (10) to said compressed-air reservoir (12),
**that** said trailer brake valve (17) is adapted to be connected via a second solenoid valve (11; 20; 26) to said compressed-air reservoir, and
**that** said controller device (2) is connected through electric lines (7, 8) to said first solenoid valve (10) and said second solenoid valve (11, 26) and is so configured that said first solenoid valve (10) and said second solenoid valve (11, 26) are separately controllable.

2. Anti-jack-knife brake device according to Claim 1, **characterised in that** said first solenoid valve (10) is a 3/2 way solenoid valve.

3. Anti-jack-knife brake device according to Claim 2, **characterised in that** said first solenoid valve (10) controls a relay valve (14).

4. Anti-jack-knife brake device according to any of the Claims 1 to 3, **characterised in that** said second solenoid valve (11) is a 3/2 way solenoid valve.

5. Anti-jack-knife brake device according to any of the Claims 1 to 3, **characterised in that** said second solenoid valve is an electrically controllable proportional valve (26).

6. Anti-jack-knife brake device according to Claim 4, **characterised in that** said second solenoid valve (11) controls said trailer brake valve (17) directly.

7. Anti-jack-knife brake device according to Claim 4, **characterised in that** said second solenoid valve (11) controls a relay valve that connects said compressed-air reservoir (12) to said trailer brake valve (17).

8. Anti-jack-knife brake device according to Claim 4, **characterised in that** an electrically controllable holding solenoid valve (20) is connected between said second solenoid valve (11) and said trailer brake valve (17).

9. Anti-jack-knife brake device according to the Claims 5 and 8, **characterised in that** a pressure voltage converter (24, 25) is connected to at least one of said pneumatic supply lines to said spring accumulator brake actuators (15, 16) and/or to said trailer brake valve (17).

10. Anti-jack-knife brake device according to any of the Claims 1 to 9, **characterised in that** operating elements (3, 4, 23) for said controller device (2) are disposed in the driver's cabin (1) of said tractor vehicle.

## Revendications

1. Dispositif de freinage à laminoir pour un véhicule automobile, composé d'un véhicule tracteur et une remorque, comprenant au moins un réservoir d'air comprimé disposé dans un véhicule tracteur, au moins un cylindre de frein à ressort accumulateur disposé dans un véhicule tracteur, et au moins une soupape de frein de remorque disposée dans ledit véhicule tracteur, et un dispositif contrôleur disposé dans ledit véhicule tracteur afin de contrôler ledit cylindre de frein à ressort accumulateur,
**caractérisé en ce**
**que** ledit au moins un cylindre de frein à ressort accumulateur (15, 16) est apte à être relié via une première électrovanne (10) audit réservoir d'air comprimé (12),
**que** ladite soupape de frein de remorque (17) est apte à être relié via une deuxième électrovanne (11 ; 20 ; 26) audit réservoir d'air comprimé, et
**que** ledit dispositif contrôleur (2) est relié par des lignes électriques (7, 8) à ladite première électrovanne (10) et à ladite deuxième électrovanne (11, 26), en étant configurée de telle façon, que ladite première électrovanne (10) et ladite deuxième électrovanne (11, 26) sont contrôlable séparément.

2. Dispositif de freinage à laminoir selon la revendication 1, **caractérisé en ce que** ladite première électrovanne (10) est une électrovanne à 3/2 voies.

3. Dispositif de freinage à laminoir selon la revendication 2, **caractérisé en ce que** ladite première électrovanne (10) commande une valve relais (14).

4. Dispositif de freinage à laminoir selon une quelconque des revendications 1 à 3, **caractérisé en ce que** ladite deuxième électrovanne (11) est une électrovanne à 3/2 voies.

5. Dispositif de freinage à laminoir selon une quelconque des revendications 1 à 3, **caractérisé en ce que** ladite deuxième électrovanne est une soupape proportionnelle à commande électrique (26).

6. Dispositif de freinage à laminoir selon la revendication 4, **caractérisé en ce que** ladite deuxième électrovanne (11) commande ladite soupape de frein de remorque (17) directement.

7. Dispositif de freinage à laminoir selon la revendication 4, **caractérisé en ce que** ladite deuxième électrovanne (11) commande une valve relais, qui relie ledit réservoir d'air comprimé (12) à ladite soupape de frein de remorque (17).

8. Dispositif de freinage à laminoir selon la revendication 4, **caractérisé en ce qu'**une électrovanne de retenue à commande électrique (20) est reliée entre ladite deuxième électrovanne (11) et ladite soupape de frein de remorque (17).

9. Dispositif de freinage à laminoir selon les revendications 5 et 8, **caractérisé en ce qu'**un convertisseur de tension à pression (24, 25) est relié à au moins une des conduites pneumatique d'alimentation desdits cylindres de frein à ressort accumulateur (15, 16) et/ou ladite soupape de frein de remorque (17).

10. Dispositif de freinage à laminoir selon une quelconque des revendications 1 à 9, **caractérisé en ce que** des éléments de commande (3, 4, 23) pour ledit dispositif contrôleur (2) sont disposés dans ladite cabine du conducteur (1) dudit véhicule tracteur.
